## Europäisches Patentamt

## European Patent Office

## Office européen des brevets

(19)

(11) Veröffentlichungsnummer: **0 223 804**
**B1**

(12) **EUROPÄISCHE PATENTSCHRIFT**

(45) Veröffentlichungstag der Patentschrift: **18.07.90**

(51) Int. Cl.⁵: **G 11 B 7/08**

(21) Anmeldenummer: **86903355.5**

(22) Anmeldetag: **30.05.86**

(86) Internationale Anmeldenummer:
**PCT/EP86/00322**

(87) Internationale Veröffentlichungsnummer:
**WO 86/07485 18.12.86 Gazette 86/27**

(54) **VERFAHREN FÜR DAS SPURSPRINGEN BEI SPURSUCHVORGÄNGEN UND SCHALTUNGSANORDNUNG ZUR DURCHFÜHRUNG DES VERFAHRENS.**

(30) Priorität: **05.06.85 DE 3520189**

(43) Veröffentlichungstag der Anmeldung:
**03.06.87 Patentblatt 87/23**

(45) Bekanntmachung des Hinweises auf die Patenterteilung:
**18.07.90 Patentblatt 90/29**

(84) Benannte Vertragsstaaten:
**AT BE CH DE FR GB IT LI LU NL SE**

(56) Entgegenhaltungen:
**EP-A-0 030 317     FR-A-2 409 572**
**EP-A-0 078 060     FR-A-2 444 314**
**EP-A-0 080 212     GB-A-2 000 612**
**EP-A-0 090 379**

**Patents Abstracts of Japan, Band 7, Nr. 146 (P-206)(1291) 25 Juni 1983 & JP-A-5857637**

**Patents Abstracts of Japan, Band 6, Nr. 82, (P-116)(960) 20 Mai 1982 & JP-A-5718036**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **BAAS, Dieter**
**Sofienstrasse 10**
**D-7640 Kehl (DE)**

Courier Press, Leamington Spa, England.

**Beschreibung**

Die Erfindung betrifft ein Verfahren nach dem Oberbegriff des Hauptanspruchs.

Der Verfahren befaßt sich insbesondere mit der Vermeidung von Bewegungen des Abtastsystems in unerwünschten Richtungen bei radialer Abtastung von CD-Platten mit Geräten, die ein einfaches Servosystem ohne Richtungserkennungslogik aufweisen.

Es gehört zum Stand der Technik, daß für das schnelle Auffinden einer beliebigen Plattenstelle die Differenzspuren zwischen Ziel und momentaner Position zunächst ermittelt und als Sollwert vorgegeben werden. Für relativ weit entfernt liegende Ziele reicht es nicht allein aus, mit dem Feinantrieb den Suchvorgang durchzuführen. Prinzipiell wird dabei so vorgegangen, daß man den Grobantrieb auf schnellen Suchlauf umschaltet, d.h. der Grobantrieb wird beschleunigt und auf hoher Geschwindigkeit gehalten. Gleichzeitig unterbricht man den Regelkreis des Feinantriebes. Während der nun ablaufenden Bewegungsphase des Grobantriebes (und des mitgenommenen Feinantriebs) werden die in radialer Richtung überquerten Spuren detektiert und gezählt. Sobald der vorgegebene Sollwert (die gesuchte Spur) erreicht ist, wird der Feinantriebsregelkreis wieder eingeschaltet und der Grobantrieb von der Suchlauf-Betriebsart in den Regelbetrieb umgeschaltet.

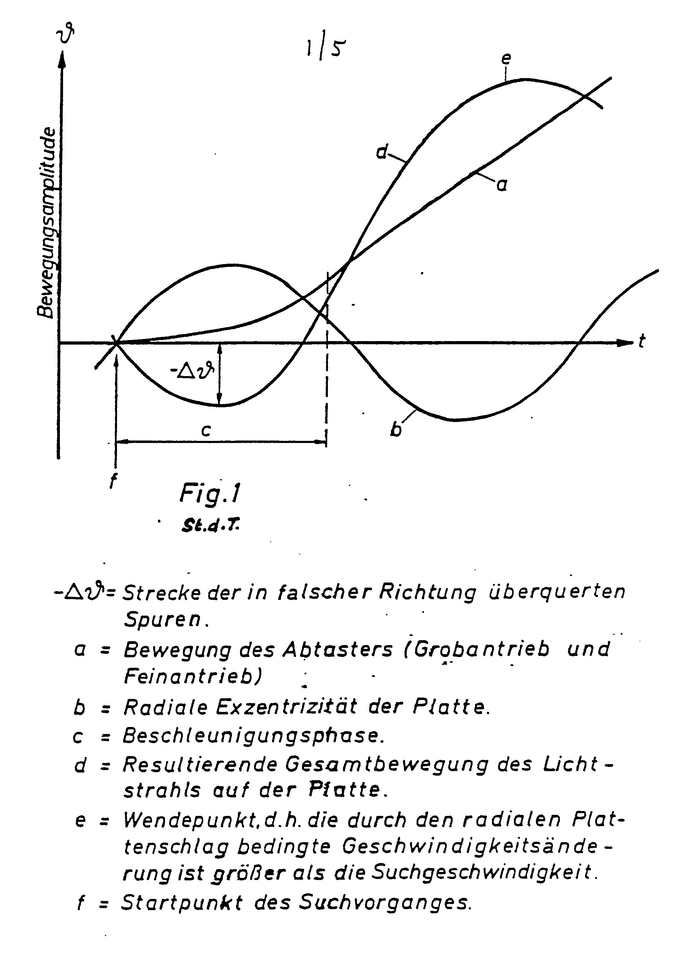

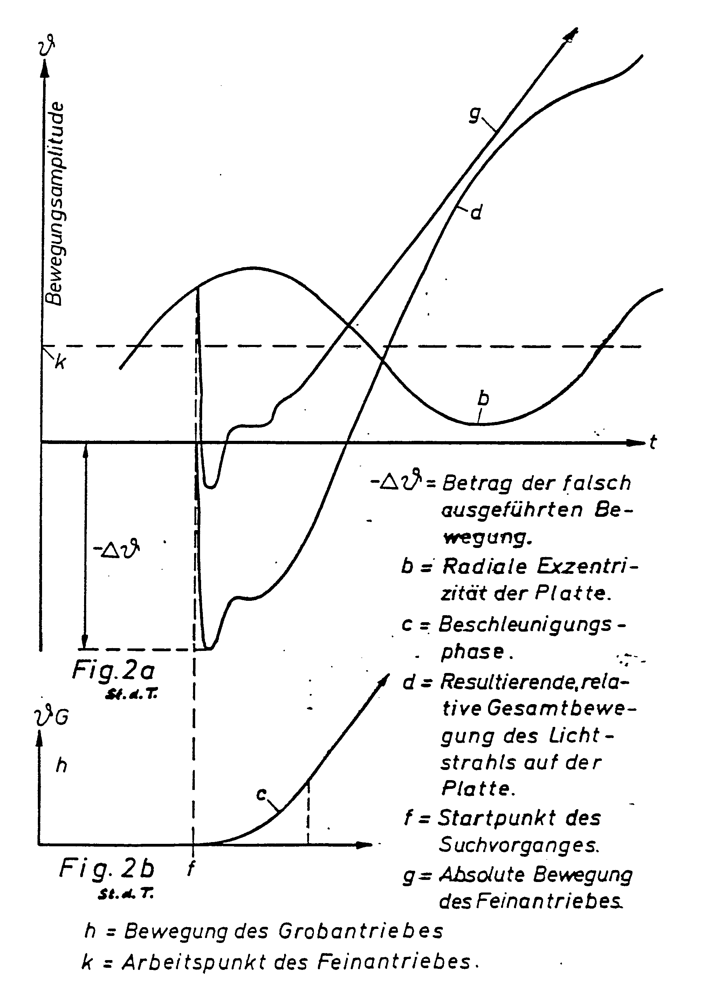

Suchsysteme, die nach diesem Prinzip arbeiten, haben in der Regel eine Richtungserkennungslogik, wie sie in der GB—A—2 000 617 beschrieben ist, mit deren Hilfe die relative Richtung des Fein- und Grobantriebes zur abzutastenden Platte festgestellt wird. Mit dieser Einrichtung wird vermieden, daß in falscher Richtung überquerte Spuren irrtümlich als richtig erkannt werden. Derartige, zur vorgegebenen Suchrichtung, falsch verlaufende Bewegungsvorgänge treten bei schnell arbeitenden Suchsystemen nur in der Start- und Landephase auf. Das ist erstens dadurch bedingt, daß die abzutastende Platte radiale Exzentrizität aufweist, die durch die Plattenführung oder- halterung sowie durch Fabrikationstoleranzen der Platte selbst gegeben ist. In den Start- bzw. Landephasen, in denen das Grobantriebs- system eine relativ langsame Bewegung ausführt, kann der Fall eintreten, daß je nach momentaner Richtung der radialen Plattenexzentrizität die daraus resultierende Bewegung der Spur die Bewegung des Abtasters einholt bzw. überholt. Dadurch ist die resultierende Bewegungsrichtung zur Platte umgekehrt zur vorgegebenen Richtung. Das ist aus der Figur 1 zu ersehen. Bei Suchsystemen ohne Richtungserkennungslogik kann kein Unterschied detektiert werden und es werden in falscher Richtung überquerte Spuren irrtümlich als richtig ausgewertet. Dadurch wird jedoch ein falscher Zielpunkt erreicht und es müssen Korrekturen vorgenomen werden. Das kann zu einer wesentlichen Erhöhung der Suchzeit führen. Das angesprochene Problem ist zweitens dadurch bedingt, daß eine kurzzeitige falsch ablaufende Bewegungsrichtung in der Startphase des Grobantriebs vorliegt. Im Moment des Startens, wenn also der Grobantrieb eingeschaltet wird und der Feinantrieb in seinem Regelkreis unterbrochen wird, kann es abhängig von der momentanen Vorauslenkung des Feinantriebs ebenfalls zu einem irrtümlich entgegengesetzten Bewegungsablauf kommen. Da der Grobantrieb in diesem ersten Moment praktisch noch keine Bewegung ausführt, kann das zur Überquerung einer großer Spuranzahl in der falschen Richtung führen. Eine große Exzentrizität zu diesem Zeitpunkt verstärkt den eintretenden Fehler und verlängert die Zeit zum Auffinden der gewünschten Stelle der Spur. Figur 2 zeigt das beispielhaft. Wenn der momentane Arbeitspunkt des Feinantriebs nicht im Nullpunkt seines Bewegungsbereichs liegt, dann kann der Auftretende Fehler bei entsprechender Sprungrichtung zusätzlich vergrößert werden, wie ebenfalls Figur 2 zeigt.

Beispielhaft für diese Art von Suchsystemen sei auch die EP—OS 0090379 genannt.

Eine andere Lösung ist der JP—A—58 57 637 zu entnehmen. Hier wird ein zusätzliches Signal auf den Feinantrieb gegeben, wodurch dieser entgegengesetzt zur Bewegungsrichtung des Grobantriebs ausgelenkt wird. Das betrifft nicht die Startphase eines Suchvorgangs. Entsprechend ist die Aufgabenstellung eine andere als bei vorliegender Erfindung.

Suchsysteme mit Richtungsdetektoren bzw. einer Richtungserkennungslogik sind aus Kostengründen derzeit den Spitzengeräten unter den CD-Spielern vorbehalten. Für einfache Suchsysteme ohne Richtungserkennungslogik führen einerseits die dargelegten Gegebenheiten zu einer erheblichen Verlängerung der Suchzeiten. Andererseits ergeben sich bei Suchsystemen mit sehr hoher Suchgeschwindigkeit bzw. bei schnellen, kurzzeitig auftretenden Hin- und Herbewegungen des Feinantriebs, wie sie in der Startphase auftreten können, große Schwierigkeiten bei der Realisierung der Richtungsdetektoren, die nur mit einem hohen Schaltungsaufwand beherrscht werden können. Das gilt ganz besonders dann, wenn für die Steuerung des Suchablaufs keine reine Hardware-Lösung, sondern eine von einem Mikroprozessor unterstützte Schaltungsvariante vorliegt.

Der vorliegenden Erfindung lag die Aufgabe zugrunde, eine Lösung zu finden für ein Suchsystem mit servogesteuertem, radialem Grob- und Feinantrieb für den optischen Abtaster eines CD-Abspielgerätes, das keine Richtungserkennungslogik besitzt, relativ billig herzustellen ist und schnelle Zugriffszeiten ermöglicht und das sich in der Zuverlässigkeit der richtigen Spurdetektion mit Systemen, die nach dem Prinzip der Richtungsdetektoren arbeiten, vergleichen läßt. Dabei ist auch gefordert, daß Plattenschlag die Abtastung nicht stört.

Diese Aufgabe wird mit einem Verfahren nach dem Oberbegriff des ersten Anspruchs erfindungsgemäß nach dessen Kennzeichen gelöst.

Der Anspruch 2 enthält eine Schaltungsanordnung zur Durchführung dieses Verfahrens.

Weitere Einzelheiten und Ausgestaltungen für die Durchführung des Verfahrens ergeben sich durch Schaltungsanordnungen nach den Unteransprüchen sowie der nachfolgenden Beschreibung.

Der Hauptvorteil des erfindungsgamäßen Verfahrens und der Schaltungseinzelheiten zu seiner Durhführung ist außer dem geringen Aufwand darin zu sehen, daß hohe Suchgeschwindigkeiten mit großer Anfangsbeschleunigung bzw. schnelle, dem Grobantrieb überlagerte Bewegungsphasen des Feinantriebes, wie sie insbesondere in der Startphase auftreten, völlig unproblematisch für die einwandfreie Funktion des Verfahrens sind. Vorteilhafter- und überraschenderweise wirken sich hohe Suchgeschwindigkeiten des Grobantriebes geradezu positiv aus. Plattenschlag durch Exzentrizität stört Suchvorgänge nicht.

Anhand der Zeichnung soll die Erfindung beschrieben werden. Es zeigen.

Figur 1 Bewegungsvorgänge eines optischen Abtastsystems in der Start- und Suchphase (Stand der Technik);

Figur 2a Bewegungsabläufe bei einseitig verschobenem Arbeitspunkt des Feinantriebs (Stand der Technik);

Figur 2b Bewegung des Grobantriebs dabei (Stand der Technik);

Figur 3 Bewegungsabläufe eines optischen Abtastsystems in der Start- und Suchphase nach dem erfindungsgemäßen Verfahren;

Figur 4 Lösungsbeispiel einer Schaltungsanordnung für die Durchführung des Verfahrens dargestellt in Form einer Blockschaltung;

Figur 5 Ablaufdiagramm der einzelnen Steuersignale aus Figur 4 für eine bestimmte Richtung.

Auf die Figuren 1 und 2 wurde bereits in der Einleitung zur besseren Verständlichkeit des Standes der Technik hingewiesen.

Nach dem efindungsgemäßen Verfahren wird der Feinregelkreis beim Starten eines Suchvorgangs nicht unbedingt sofort aufgetrennt. Vielmehr werden verschiedene Kriterien abgefragt und die Öffnung des Feinregelkreises vom Ergebnis dieser Auswertung abhängig gemacht.

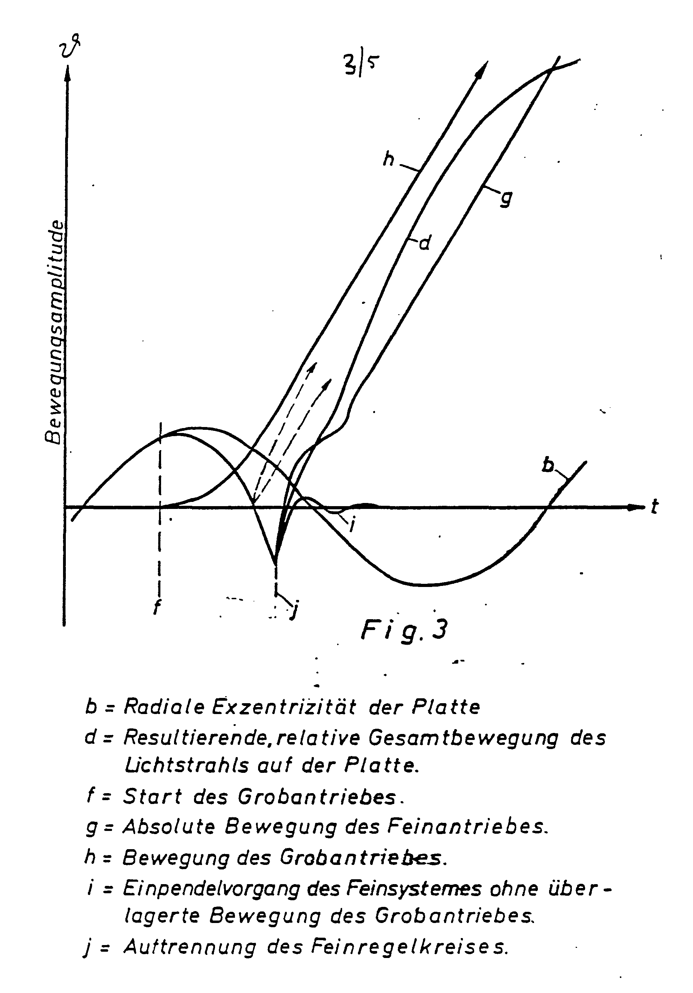

Charakterisierend für das Verfahren ist, daß der Feinantrieb (und damit der optische Abtaster) kurzzeitig entgegenegesetzt zu der gewünschten Suchrichtung ausgelenkt wird. Das wird erreicht, indem der Grobantrieb gestartet wird, währen der Feinantrieb den Abtaster noch in der momentanen Spur hält. Erst wenn der Abtaster genügend stark entgegengesetzt zu der gewünschten Suchrichtung ausgelenkt ist, wird der Regelkreis des Feinantriebs unterbrochen. Durch die Vorauslenkung des Abtasters kann sich dieser nur in einer Richtung entgegen dieser Vorauslenkung, also in Suchrichtung, bewegen. Sorgt man dafür, daß der Grobantrieb zu diesem Zeitpunkt bereits eine hohe Geschwindigkeit hat, so kann sich ein Einpendeln des Abtasters in seine Nullage nicht nachteilig auswirken. Das ist aus Figur 3 zu ersehen. Wie die Figur 3 ebenfalls zeigt, bleibt die resultierende Gesamtbewegung des Abtasters positiv und somit werden keine Spuren in falscher (negativer) Richtung überquert.

Um solche Einpendelvorgänge zu vermeiden, kann der Feinantriebsregelkreis genau in der Nullage unterbrochen werden, wie es in Figur 3 gestrichelt eingetragen ist. Nachteilig wirkt sich hier aus, daß je nach Sprungrichtung und radialer Exzentrizität durch Plattenschlag der Nulldurchgang ohne Voreinschaltung des Grobantriebes abgewartet werden muß. Das bewirkt eine Verlängerung der Zugriffzeiten. Außerdem kann bei Feinantriebssystemen, deren Arbeitspunkt außerhalb der Nullinie liegt, diese ja nach Größe der radialen Exzentrizität der Platte nicht erreicht werden und kann folglich als Entscheidungskriterium nicht herangezogen werden.

Auch bei Positionen des Abtasters in der Startphase des Suchvorganges, die sich günstig auf die Suchrichtung auswirken, sollte generell, eine Mindest-Beschleunigungsphase für den Grobantrieb bei noch geschlossenem Feinantriebsregelkreis eingehalten werden. Dadurch wird vermieden, daß sich Einpendelvorgänge bzw. die radiale Exzentrizität der Platte nachteilig auf die gewünschte Bewegungsrichtung auswirkt.

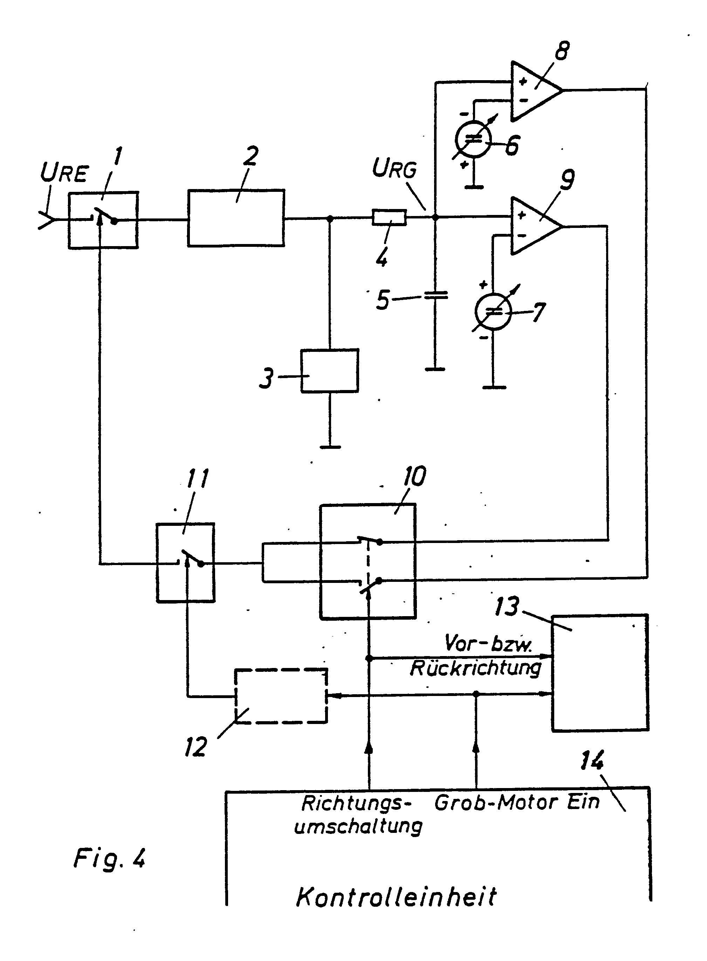

Eine beispielhafte Schaltungsanordnung zur Durchführung des Verfahrens zeigt Figur 4. Es sind zwei einstellbare Detektoren 8 und 9 vorgesehen. Sie sind zwar hier je einer Suchrichtung zugeordnet, arbeiten aber nicht als Richtungssondern nur als Schwellwertdetektoren. Ein Tiefpaßglied 4, 5 gewinnt aus dem Radialfehlersignal URE, das direkt am Radialaktuator 3 des Feinantriebsystems und am Ausgang des Regelers 2 abgenommen werden kann, das Steuersignal URG für die Detektoren 8, 9. Dieses Steuersignal URG ist direkt proportional zu der in den Figuren 1, 2 und 3 als Ordinate eingetragenen Bewegungsemplitude. Mit Hilfe diese Detektoren 8, 9 wird über den Umschalter 10, der von der Kontrolleinheit 14 je nach gewünschter Richtung entsprechend geschaltet ist und das betreffende Detektorausgangssignal selektiert, und über den Schalter 11 der Feinantriebsregelkreis mit Hilfe des Schalters 1 ausgeschaltet.

Das gestrichelt eingezeichnete Verzögerungsglied 12 ist nur dann von Bedeutung, wenn die Schwellwerte (-Einsteller) 6 bzw. 7 der Detektoren 8, 9 so niedrig gewählt sind, daß bereits eine im Spielbetrieb auftrende radiale Exzentrizität die Detektoren 8, 9 schaltet. Diese Verzögerungszeit ist systembezogen und durch die Beschleunigungsphase des Grobantriebs 13 bestimmt und ist hier als Konstante vorgegeben. Sie garantiert, daß sich in dem zuvor erwähnten Fall keine Einpendelbewegungen des Feinantriebs sowie eine überlagerte radiale Exzentrizität der Platte in der Startphase negativ auswirken.

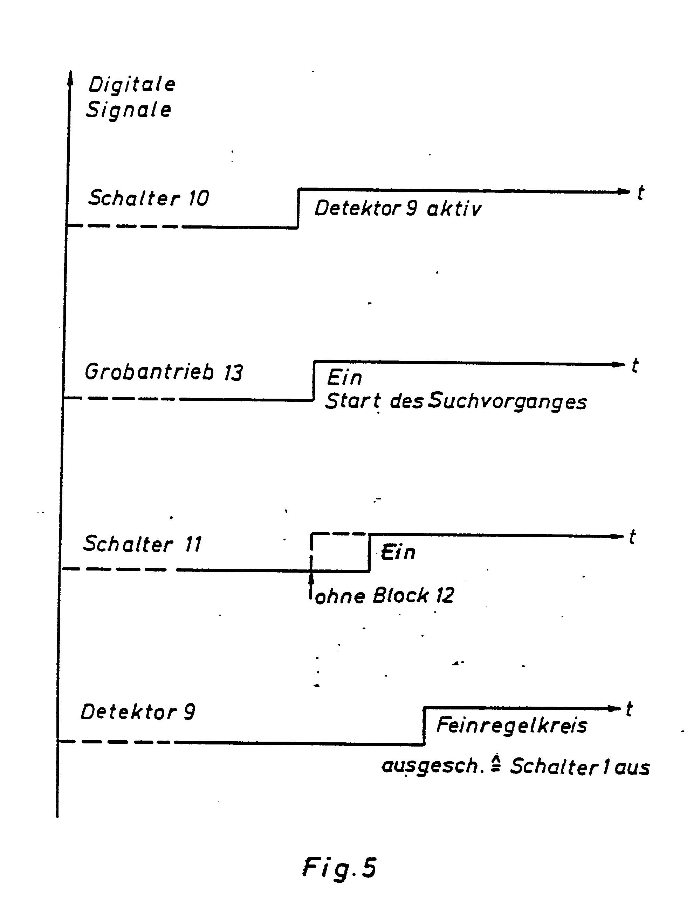

Figur 5 zeigt die Ablaufdiagramme der einzelnen Steuersignale, wie sie im Blockschaltbild der Schaltungsanordnung (Figur 4) für eine bestimmte gewünschte Richtung auftreten.

## Patentansprüche

1. Verfahren für das Spurspringen zu einer gewünschten Spur bei einem mit einem optischen Abtaster abgetasteten rotierenden Informationsträger, wobei der Abtaster mit einem Grob- (13) und einem Feinantrieb (3) radial beweglich ist, wobei ein Servokreis vorhanden ist, der mittels eines Radialfehlersignals $U_{RE}$ den Feinantrieb steuert und der während des vom Grobantrieb bewirkten Spurspringens geöffnet ist und wobei bei offenem Servokreis die radial überquerten Spuren ohne Berücksichtigung der Richtung der überquerung gezählt werden, dadurch gekennzeichnet, daß beim Spurspringen der Servokreis des Feinantriebs (3) zunächst geschlossen bleibt, wenn der Grobantrieb (13) sofort (f in Figur 3) entsprechend der eingegebenen Suchrichtung in Bewegung gesetzt wird und der Servokreis des Feinantriebs erst (j in Figur 3) bei sich daraufhin ergebenden Kriterien aufgetrennt wird, derart, daß unter Berücksichtigung der Beschleunigung und der Suchgeschwindigkeit des Grobantriebs (k in Figur 3) einerseits und de Exzentrizität der Spuren (b in Figur 3) und der Bewegung des Abtasters (i in Figur 3) andererseits gewährleistet ist, daß sich die relative Bewegung zwischen Informationsträger und Strahl nach dem Start des Grobantriebs nicht umkehrt.

2. Schaltungsanordnung für das Spurspringen zu einer gewünschten Spur bei einem mit einem optischen Abtaster abgetasteten rotierenden Informationsträger, wobei der Abtaster mit einem Grob- (13) und einem Feinantrieb (3) radial beweglich ist, wobei ein Servokreis vorhanden ist, der mittels eines Radialfehlersignals $U_{RE}$ den Feinantrieb steuert und der während des vom Grobantrieb bewirkten Spurspringens geöffnet ist und wobei bei offenem Servokreis die radial überquerten Spuren ohne Berücksichtigung der Richtung der überquerung gezählt werden, gekennzeichnet, durch Mittel, die beim Spurspringen den Servokreis des Feinantriebs (3) zunächst geschlossen halten, wenn der Grobantrieb (13) sofort (f in Figur 3) entsprechend der eingegebenen Suchrichtung in Bewegung gesetzt wird, und die den Servokreis des Feinantriebs erst (j in Figur 3) bei sich daraufhin ergebenden Kriterien aufgetrennt, derart, daß unter Berücksichtigung der Beschleunigung und der Suchgeschwindigkeit des Grobantriebs (k in Figur 3) einerseits und der Exzentrizität der Spuren (b in Figur 3) und der Bewegung des Abtasters (i in Figur 3) andererseits gewährleistet ist, daß sich die relative Bewegung zwischen Informationsträger und Strahl nach dem Start des Grobantriebs nicht umkehrt.

3. Schaltungsanordnung nach Anspruch 2, dadurch gekennzeichnet, daß die öffnung des Servokreises des Feinantriebs vom Ausgangssignal lines Detektors des Radialfehlersignals ($U_{RE}$) ausgelöst wird, der einen festen Bezugspunkt besitzt, wobei dieser Bezugspunkt Null sein kann oder ein Pegel, der der Mittenstellung (Nullstellung) des Feinantriebs zugeordnet ist.

4. Schaltungsanordnung nach Anspruch 2, dadurch gekennzeichnet, daß die öffnung des Servokreises des Feinantriebes vom Ausgangssignal eines in der Schwelle verstellbaren Detektors (8, 9) des Radialfehlersignals ausgelöst wird.

5. Schaltungsanordnung nach Anspruch 3 und/oder 4, dadurch gekennzeichnet, daß dadurch zwischen vor- und rückwärtiger Suchrichtung unterschieden wird, daß zwei je einer dieser Suchrichtungen zugeordnete Detektoren (8, 9) vorgesehen sind.

6. Schaltungsanordnung nach Anspruch 5, dadurch gekennzeichnet, daß mehrere Detektoren bzw. A/D-Wandler verwendet werden.

7. Schaltungsanordnung nach Anspruch 2, dadurch gekennzeichnet, daß der Regelkreis des Feinantriebes erst nach Ablauf einer fest vorgegebenen Verzögerungszeit geöffnet wird.

8. Schaltungsanordnung nach Anspruch 7, dadurch gekennzeichnet, daß der Betrag der Verzögerungszeit von Systemkonstanten abhängt, wie verwendete Laufwerks- und/oder Abtasteinheit.

9. Schaltungsanordnung nach Anspruch 8, dadurch gekennzeichnet, daß die verstellbare Verzögerungszeit durch die Größe und Richtung der in der Startphase des Wiedergrabebetriebes ermittelten radialen Exzentrizität bestimmt wird.

11. Schaltungsanordnung gemäß Anspruch 9, dadurch gekennzeichnet, daß die verstellbare Verzögerungszeit durch die ermittelte Sprungweite derart mitbestimmt wird, daß sie bei kurzen Sprungweiten verkleinert und bei großen Sprungweiten vergrößert wird.

11. Schaltungsanordnung nach Anspruch 2, dadurch gekennzeichnet, daß Mittel vorgesehen sind, die dafür sorgen, daß eine in Bezug auf die Suchrichtung günstigere radiale Exzentrizität abgewartet wird.

12. Schaltungsanordnung nach Anspruch 2 und/oder einem der nachfolgenden Ansprüche, dadurch gekennzeichnet, daß die öffnung des Feinantriebsregelkreises erst nach dem gewaltsamen Abreißen des Abtastlichtstrahles von der Spur durchgeführt wird, wobei Mittel vorgesehen sind, die dafür sorgen, daß der Zeitpunkt des Unterbrechens des Feinantriebregelkreises zusätzlich von der Größe de Sprungweite abgeleitet wird.

13. Schaltungsanordnung nach Anspruch 12, dadurch gekennzeichnet, daß die Kreisverstärkung des Feinantriebregelkreises während der Startphase des Grobantriebes reduziert wird.

## Revendications

1. Procédé de saut des pistes jusq'à une piste voulue sur un support d'informations mobile en rotation, exploré par un capteur optique déplaçable dans le sens radial par une commande grossière (13) et une commande fine (3), un circuit d'asservissement étant prévu pour commander la commande fine par un signal d'erreur radiale $U_{RE}$ et qui est ouvert pendant le saut de pistes généré par la commande grossière, les pistes franchies radialement étant comptées indépendamment du sens de franchissement pendant l'ouverture du circuit d'asservissement, caractérisé en ce que le circuit d'asservissement de la commande fine (3) reste tout d'abord fermé pendant le saut de pistes lorsque la commande grossière (13) est immédiatement mise en marche (f sur la figure 3) en fonction du sens de recherche indiqué et que le circuit d'asservissement de la commande fine est seulement désaccouplé (j sur la figure 3) en fonction des critères en résultant, de manière à assurer que le mouvement relatif entre le support d'informations et le faisceau ne peut s'inverser après le démarrage de la commande grossière, compte tenu de l'accélération et de la vitesse de recherche de la commande grossière (k sur la figure 3) d'une part et de l'excentricité des pistes (b sur la figure 3) et du déplacement du capteur (i sur la figure 3) d'autre part.

2. Montage pour le saut des pistes jusqu'à une piste voulue sur un support d'informations mobile en rotation, exploré par un capteur optique déplaçable dans le sens radial par une commande grossière (13) et une commande fine (3), un circuit d'asservissement étant prévu pour commander la commande fine par un signal d'erreur radiale $U_{RE}$ et qui est ouvert pendant le saut de pistes généré par la commande grossière, les pistes franchies dans le sens radial étant comptées indépendamment du sens de franchissement pendant l'ouverture du circuit d'asservissement, caractérisé par des moyens qui maintiennent tout d'abord le circuit d'asservissement de la commande fine (3) à l'état fermé pendant le saut de pistes, lorsque la commande grossière (13) est mise en marche immédiatement (f sur la figure 3) en fonction de la direction indiquée et qui séparent le circuit d'asservissement de la commande fine seulement (j sur la figure 3) selon des critères en résultant, de manière à assurer que le mouvement relatif entre le support d'informations et le faisceau ne peut s'inverser après le démarrage de la commande grossière, compte tenu de l'accélération et de la vitesse de recherche de la commande grossière (k sur la figure 3) d'une part et de l'excentricité des pistes (b sur la figure 3) et du déplacement du capteur (i sur la figure 3) d'autre part.

3. Montage selon la revendication 2, caractérisé en ce que l'ouverture du circuit d'asservissement de la commande fine est déclenchée par le signal de sortie d'un détecteur du signal d'erreur radiale $U_{RE}$, qui a un point de référence fixe, ce point de référence pouvant être nul ou avoir un niveau associé à la position médiane (position zéro) de la commande fine.

4. Montage selon la revendication 2, caractérisé en ce que l'ouverture du circuit d'asservissement de la commande fine est déclenchée par le signal de sortie d'un détecteur (8, 9) du signal d'erreur radiale, dont le seuil est réglable.

5. Montage selon la revendication 3 et/ou 4, caractérisé en ce que deux détecteurs (8, 9) sont affectés chacun à l'un des sens de recherche, ce qui permet de faire la distinction entre un sens de recherche avant et arrière.

6. Montage selon la revendication 5, caractérisé en ce que plusieurs détecteurs et/ou convertisseurs A/D sont utilisés.

7. Montage selon la revendication 2, caractérisé en ce que le circuit de régulation de la commande fine est ouvert seulement après un temps de retard fixe préréglé.

8. Montage selon la revendication 7, caractérisé en ce que la valeur du temps de retard est fonction de constantes de système tels que des mécanisme et/ou capteur.

9. Montage selon la revendication 8, caractérisé en ce que le temps de retard réglable est déterminé par la grandeur et le sens de l'excentricité radiale définis au cours de la phase de démarrage du mode de reproduction.

10. Montage selon la revendication 9, caractérisé en ce que le temps de retard réglable est codéterminé par l'amplitude du saut constaté, qu'il est réduit pour de brèves amplitudes de saut et agrandi pour de grandes amplitudes de saut.

11. Montage selon la revendication 2, caractérisé en ce qu'on a prévu des moyens servant à attendre une excentricité radiale plus favorable eu égard au sens de recherche.

12. Montage selon la revendication 2 et/ou l'une des revendications suivantes, caractérisé en ce que l'ouverture du circuit de régulation de la commande fine intervient seulement après une rupture brutale du faisceau de balayage de la piste, des moyens étant prévus pour faire dériver le moment de l'interruption du circuit de régulation de la commande fine en plus de l'amplitude du saut.

13. Montage selon la revendication 12, caractérisé en ce que l'intensification du circuit de régulation de la commande fine est réduite pendant la phase de démarrage de la commande grossière.

**Claims**

1. A method of track jumping to a desired track for a rotating information carrier scanned with an optical scanner, wherein the scanner is movable radially by a coarse drive (13) and a fine drive (3), wherein a servo circuit is present which controls the fine drive by means of a radial error signal $U_{RE}$ and which is open during the track jumping caused by the coarse drive, and wherein, with the servo circuit open, the tracks traversed radially are counted without regard to the direction of the traversing, characterised in that during the track jumping, the servo circuit of the fine drive (3) at first remains closed if the coarse drive (13) is immediately set in motion (f in Figure 3) in accordance with the search direction fed in, and the servo circuit of the fine drive is only opened (j in Figure 3) in the event of criteria following as a result, in such a manner that, taking into account the acceleration and the search speed of the coarse drive (k in Figure 3) on the one hand and the eccentricity of the tracks (b in Figure 3) and the movement of the scanner (i in Figure 3) on the other hand, assurance is provided that the relative movement between information carrier and beam is not reversed after the start of the coarse drive.

2. A circuit arrangement for track jumping to a desired track for a rotating information carrier scanned with an optical scanner, wherein the scanner is movable radially by a coarse drive (13) and a fine drive (3), wherein a servo circuit is present which controls the fine drive by means of a radial error signal $U_{RE}$ and which is open during the track jumping caused by the coarse drive, and wherein, with the servo circuit open, the tracks traversed radially are counted without regard to the direction of the traversing, characterised by means which, during the track jumping, at first hold the servo circuit of the fine drive (3) closed if the coarse drive (13) is immediately (f in Figure 3) set in motion according to the search direction fed in, and which only open (j in Figure 3) the servo circuit of the fine drive in the event of criteria following as a result, in such a manner that, taking into account the acceleration and the search speed of the coarse drive (k in Figure 3) on the one hand and the eccentricity of the tracks (b in Figure 3) and the movement of the scanner (i in Figure 3) on the other hand, assurance is provided that the relative movement between information carrier and beam is not reversed after the start of the coarse drive.

3. A circuit arrangement according to Claim 2, characterised in that the opening of the servo circuit of the fine drive is triggered by the output signal of a detector of the radial error signal ($U_{RE}$), which has a fixed reference point, and this reference point may be zero or a level which is associated with the mid position (neutral position) of the fine drive.

4. A circuit arrangement according to Claim 2, characterised in that the opening of the servo circuit of the fine drive is triggered by the output signal of a detector (8, 9) of the radial error signal, the threshold of which detector is adjustable.

5. A circuit arrangement according to Claim 3 and/or 4, characterised in that a distinction is made between a forward and backward search direction as a result of the fact that two detectors (8, 9) are provided, one of which is associated with each of these search directions.

6. A circuit arrangement according to Claim 5, characterised in that a plurality of detectors or A/D converters are used.

7. A circuit arrangement according to Claim 2, characterised in that the control loop of the fine drive is only opened after the expiration of a fixed preset delay time.

8. A circuit arrangement according to Claim 7, characterised in that the extent of the delay time depends on system constants such as turntable unit and/or scanning unit used.

9. A circuit arrangement according to Claim 8, characterised in that the adjustable delay time is determined by the magnitude and direction of the radial eccentricity found in the starting phase of reproduction operation.

10. A circuit arrangement according to Claim 9, characterised in that the adjustable delay time is also determined by the jumping distance detected, in such a manner that it is reduced for short jumping distances and increased for long jumping distances.

11. A circuit arrangement according to Claim 2, characterised in that means are provided which ensure that a more favourable radial eccentricity with regard to the search direction is awaited.

12. A circuit arrangement according to Claim 2 and/or any one of the following Claims, characterised in that the opening of the fine drive control loop is only effected after the forcible removal of the scanning beam of light from the track, means being provided which ensure that the moment of opening of the fine drive control loop is additionally derived from the magnitude of the jumping distance.

13. A circuit arrangement according to Claim 12, characterised in that the closed-loop gain of the fine drive control loop is reduced during the starting phase of the coarse drive.

1/5

Fig.1
St.d.T.

$-\Delta\vartheta$ = Strecke der in falscher Richtung überquerten Spuren.

a = Bewegung des Abtasters (Grobantrieb und Feinantrieb)

b = Radiale Exzentrizität der Platte.

c = Beschleunigungsphase.

d = Resultierende Gesamtbewegung des Lichtstrahls auf der Platte.

e = Wendepunkt, d.h. die durch den radialen Plattenschlag bedingte Geschwindigkeitsänderung ist größer als die Suchgeschwindigkeit.

f = Startpunkt des Suchvorganges.

ϑ

*Bewegungsamplitude*

*k*

*g*

*d*

*b*

*t*

−Δϑ

*Fig. 2a*
**St. d. T.**

ϑG

*h*

*f*

*c*

*Fig. 2b*
**St. d. T.**

−Δϑ = *Betrag der falsch ausgeführten Bewegung.*

b = *Radiale Exzentrizität der Platte.*

c = *Beschleunigungsphase.*

d = *Resultierende, relative Gesamtbewegung des Lichtstrahls auf der Platte.*

f = *Startpunkt des Suchvorganges.*

g = *Absolute Bewegung des Feinantriebes.*

h = *Bewegung des Grobantriebes*

k = *Arbeitspunkt des Feinantriebes.*

3/5

Fig. 3

b = Radiale Exzentrizität der Platte

d = Resultierende, relative Gesamtbewegung des
Lichtstrahls auf der Platte.

f = Start des Grobantriebes.

g = Absolute Bewegung des Feinantriebes.

h = Bewegung des Grobantriebes.

i = Einpendelvorgang des Feinsystemes ohne überlagerte Bewegung des Grobantriebes.

j = Auftrennung des Feinregelkreises.

*Fig. 4*

**Digitale Signale**

Schalter 10 — Detektor 9 aktiv

Grobantrieb 13 — Ein / Start des Suchvorganges

Schalter 11 — Ein / ohne Block 12

Detektor 9 — Feinregelkreis / ausgesch. ≙ Schalter 1 aus

*Fig. 5*